# EUROPÄISCHE PATENTSCHRIFT

(11) **EP 4 617 248 B1**
(45) Veröffentlichungstag und Bekanntmachung des Hinweises auf die Patenterteilung: **06.05.2026**
(21) Anmeldenummer: 24162613.4
(22) Anmeldetag: 11.03.2024
(51) Int. Cl.: C04B 28/18, C04B 28/14, C04B 111/10, C04B 111/27, C04B 111/62

(54) **SELBSTNIVELLIERENDE SPACHTELMASSE MIT HOHER FEUCHTERESISTENZ**
SELF-LEVELLING MASTIC WITH HIGH HUMIDITY RESISTANCE
MASTIC AUTO-NIVELLANTE À HAUTE RÉSISTANCE À L'HUMIDITÉ

(43) Veröffentlichungstag der Anmeldung: 17.09.2025
(73) Patentinhaber: Uzin Utz SE, 89079 Ulm (DE)
(72) Erfinder: TSALOS, Johannis, 89079 Ulm (DE); EISENMANN, Hans-Georg, 89079 Ulm (DE); JOECHLE, Timo, 89079 Ulm (DE)
(74) Vertreter: Isarpatent

(56) Entgegenhaltungen:
- WO-A1-2014/108434
- WO-A1-95/33698
- WO-A1-99/46215
- DE-A1- 10 124 149
- DE-A1- 3 843 625
- US-A- 5 685 903

## Beschreibung

### Gebiet der Erfindung

Die Erfindung betrifft eine selbstnivellierende Spachtelmasse mit hoher Feuchteresistenz.

### Stand der Technik

Bei der Verlegung von Bodenbelägen ist sowohl im Neubau als auch bei Renovierungen oftmals ein Bodenausgleich zur Untergrundvorbereitung notwendig. Hierzu werden u.a. pulverförmige Produkte bzw. Trockenmörtel eingesetzt, die auf der Baustelle nur noch mit einer bestimmten Menge Wasser angerührt werden müssen. Bei fachgerechter Verarbeitung der auf dem Untergrund applizierten Bodenausgleichsmasse bietet sie eine entsprechend ebene Oberfläche zur Verklebung von Bodenbelägen (z.B. PVC, Linoleum, Kautschuk, Parkett, keramische Fliese).

Anhand des zugrunde gelegten Bindemittels kann eine Unterteilung handelsüblicher Spachtelmassen getroffen werden. Neben Dispersions- und Reaktionsharz-Spachtelmassen, die oftmals sehr teuer und daher Spezialanwendungen vorbehalten sind, bilden Spachtelmassen auf anorganischer Bindemittelbasis (beispielsweise Zement- und Calciumsulfatspachtelmassen) den weitaus größeren Anwendungsbereich.

Heutzutage werden bei der Formulierung selbstverlaufender Bodenspachtelmassen zumeist Bindemittelsysteme bestehend aus Calciumsulfatträger (alpha-Halbhydrat, beta-Halbhydrat, Anhydrit oder Abmischungen davon) in Kombination mit einem oder mehreren Zementen (Portland-, Calciumaluminat- oder Calciumsulfoaluminatzement) eingesetzt. Durch die Kombination oben beschriebener Bindemittel können wichtige Eigenschaften wie z.B. Abbinde- und Erhärtungszeit, Frühfestigkeitsentwicklung, geringer Schwund etc. eingestellt werden.

Je nachdem, ob das zugrundeliegende Bindemittelsystem mehr Calciumsulfatträger oder mehr Zement enthält, spricht man von Spachtelmassen auf CaSO₄-Basis oder Spachtelmassen auf Zement-Basis. Das im Überschuss eingesetzte Bindemittel kann als Hauptbindemittel, die anderen Bindemittel-Bestandteile als Nebenbindemittel bezeichnet werden. Eine Definition von Spachtelmassen auf CaSO₄-Basis und Spachtelmassen auf Zement-Basis ist im TKB-Merkblatt 9, Stand Juli 2019, Kapitel 4.1 angegeben.

Herkömmliche selbstnivellierende Bodenspachtelmassen, die als Hauptbindemittel Zement (Portland-, Calciumaluminat- oder Calciumsulfoaluminatzement) enthalten, haben gegenüber Calciumsulfatspachtelmassen die Neigung zu größerem Schwund und weisen demnach eine geringe Dimensionsstabilität auf. Dies bedeutet für die daraus hergestellten Spachtelmassen-Oberflächen oftmals ein höheres Risiko der Rissbildung. Zusätzlich tragen diese Spachtelmassen aufgrund des Zementgehalts zu einem erhöhten GWP (Global Warming Potential) bei.

Dagegen sind Zementspachtelmassen eher feuchtebeständig, weshalb im TKB-Merkblatt 9 explizit darauf hingewiesen wird, dass CaSO₄-Spachtelmassen weder in Außen- noch in Nassbereichen wie zum Beispiel in Badezimmern verwendet werden dürfen. Der Grund für die nicht gegebene Feuchtebeständigkeit von CaSO₄-Spachtelmassen liegt vor allem darin, dass die primär beim Abbinden bzw. Trocknen der Spachtelmasse entstehenden, nadelförmigen und sich ineinander verzahnenden Gipskristalle bei weiterer Wasserzugabe voneinander lösen. Es ist bekannt, dass Gips wasserlöslich ist und bei nachträglichem Wassereintrag Festigkeit wieder verloren geht.

Aus diesem Grund hat die Entwicklung von feuchtigkeitsbeständigen Spachtelmassen auf CaSO₄-Basis Bedeutung erlangt. In den Druckschriften WO 2014/108436 A1, WO 2014/108434 A1, WO 2015/062749 A1, DE 10 2013 200 119 A1 und DE 10 2013 200 121 A1 werden Bindemittel auf CaSO₄-Basis beschrieben, die eine gewisse Feuchtigkeitsresistenz aufweisen. Allerdings enthalten diese Bindemittel zusätzlich Portland-, Calciumaluminat- oder Calciumsulfoaluminatzement, was zu einer verminderten Dimensionsstabilität und einem erhöhten GWP-Wert führen kann. Gleiches gilt für die Zusammensetzungen, die in US 2019/0062216 A1 und DE 10 2021 125 435 A1 beschrieben sind.

Sämtliche in der Literatur bekannten Formulierungen von CaSO₄-Spachtelmassen enthalten zusätzlich als Nebenbindemittel Portland-, Calciumaluminat- und/oder Calciumsulfoaluminatzement und sind somit in der Regel entweder nicht dimensionsstabil oder haben einen relativ hohen GWP-Wert. Demnach besteht der Bedarf an der Entwicklung einer selbstnivellierenden Spachtelmasse mit verbesserter Feuchtigkeitsresistenz, sowie gleichzeitig erhöhter Dimensionsstabilität und niedrigem GWP-Wert.

### Zusammenfassung der Erfindung

In einem ersten Aspekt stellt die vorliegende Erfindung eine selbstnivellierende Spachtelmasse bereit, die im Wesentlichen aus 30 bis 40 Gew.-% eines ersten Bindemittels, 10 bis 20 Gew.-% eines zweiten Bindemittels, 40 bis 59 Gew.-% mindestens eines Füllstoffs und >0 bis 5 Gew.-% Zusatzstoffe und/oder sonstige Bestandteile, basierend auf dem Trockengewicht der Spachtelmasse, besteht. Dabei beträgt das Gewichtsverhältnis des ersten Bindemittels zum zweiten Bindemittel 2 : 1 bis 3,5 : 1. Weiterhin ist das erste Bindemittel α-Calciumsulfat-Halbhydrat und das zweite Bindemittel umfasst 35 bis 50 Gew.-% CaO, 25 bis 45 Gew.-% SiO₂, 2 bis 7 Gew.-% Wasser, 0 bis < 1 Gew.-% Fe₂O₃, 0 bis <2 Gew.-% Al₂O₃ und 0 bis <2 Gew.-% SO₃, basierend auf dem Gesamtgewicht des zweiten Bindemittels.

Die Erfinder haben überraschenderweise herausgefunden, dass eine solche Spachtelmasse sowohl eine erhöhte Feuchteresistenz, als auch eine verbesserte Dimensionsstabilität aufweist. Damit kann die Spachtelmasse in Nassbereichen eingesetzt werden. Durch den Einsatz des zweiten Bindemittels kann zudem auf Portland-, Calciumaluminat- oder Calciumsulfoaluminatzement verzichtet werden, sodass der GWP-Wert der Spachtelmasse verringert signifikant werden kann.

In einem weiteren Aspekt stellt die vorliegende Erfindung die Verwendung einer Spachtelmasse gemäß des ersten Aspekts zum Nivellieren von Fußbodenuntergründen mit einer Restfeuchtigkeit bis 5 CM%, gemessen nach der CM-Methode, oder 99% r.F., gemessen nach der KRL-Methode, bereit. Wie oben beschrieben kann die Spachtelmasse aufgrund ihrer Feuchtigkeitsresistenz auf solchen Untergründen eingesetzt werden. Durch die Dimensionsstabilität der Spachtelmasse kann ferner die Rissbildung auf restfeuchten Untergründen verhindert werden.

Weitere Aspekte der vorliegenden Erfindung sind den abhängigen Ansprüchen und der detaillierten Beschreibung zu entnehmen.

### Detaillierte Beschreibung der Erfindung

### Definitionen

So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

Mengenangaben im Rahmen der vorliegenden Erfindung beziehen sich auf Gew.-%, soweit nicht anderweitig angegeben oder aus dem Kontext ersichtlich ist.

Der Begriff "selbstnivellierend" ist im Kontext der vorliegenden Erfindung nicht besonderes limitiert. Insbesondere können im Rahmen der vorliegenden Erfindung "selbstnivellierend" und "selbstverlaufend" synonym verwendet werden. Wie allgemein bekannt bedeutet "selbstnivellierend", dass sich eine mit Wasser angemachte Spachtelmasse auf einem Untergrund selbstständig bzw. durch das Eigengewicht und dem charakteristischen Fließverhalten weitgehend mit geringer manueller Kraft des Verarbeiters ausbreitet und eine ebene Oberfläche bildet. Spachtelmassen mit selbstnivellierenden Eigenschaften sind kommerziell erhältlich und im Stand der Technik bekannt. Selbstnivellierende Spachtelmassen sind für eine Anwendung zur Nivellierung von Untergründen und v.a. vorbereitend für die spätere Verlegung eines Bodenbelags geeignet. In bestimmten Ausführungsformen ist eine Spachtelmasse selbstnivellierend, wenn sie die Fähigkeit besitzt sich unter ihrem Eigengewicht zu verteilen. Gemäß manchen Ausführungsformen ist eine Spachtelmasse selbstnivellierend, wenn die Spachtelmasse eine Auslaufzeit von maximal 70 s und ein Ausbreitmaß von mindestens 11 cm, gemessen mit einem Auslaufbecher gemäß der DIN 53211:1987-06 mit einer 6 mm Düse, aufweist. Zur Messung der Auslaufzeit und des Ausbreitmaßes wird die Spachtelmasse mit Wasser angemacht. Dabei können 18 bis 22 Gew.-% Wasser zur trockenen Spachtelmasse gegeben werden, bezogen auf das Trockengewicht der Spachtelmasse. Dabei bedeutet "trocken", dass die Spachtelmasse nicht mit Wasser angemacht wurde. Gemäß einigen Ausführungsformen wird zur Messung der Auslaufzeit und des Ausbreitmaßes ein Auslaufbecher gemäß der DIN 53211:1987-06 verwendet, mit dem Unterschied, dass statt der in der DIN 53211:1987-06 angegebenen 4 mm Düse eine 6 mm Düse verwendet wird. Eine ausführliche Beschreibung der Bestimmung der Auslaufzeit und des Ausbreitmaßes ist weiter unten gegeben.

Der Begriff "Nivellieren" ist im Rahmen der vorliegenden Erfindung nicht besonders limitiert. Wie allgemein bekannt bezeichnet "Nivellieren" das Verfahren zur Herstellung einer ebenen und homogenen Oberfläche durch Auftragen einer Bodenspachtelmasse oder Ausgleichsmasse auf einen Boden oder Untergrund. Das Ziel des Nivellierens ist es, eine gleichmäßige, tragfähige Basis für die nachfolgende Bodenbelagsinstallation oder andere Bauanwendungen zu schaffen. Das Nivellieren umfasst typischerweise das Mischen der Ausgleichsmasse mit Wasser gemäß den Herstellerangaben, das Auftragen der flüssigen Masse mit geeigneten Werkzeugen und Techniken zur Gewährleistung einer gleichmäßigen Verteilung und das anschließende Glätten der Oberfläche, bis die gewünschte Ebenheit erreicht ist.

Der Begriff "Trockengewicht" ist im Rahmen der vorliegenden Erfindung nicht besonders limitiert. Gemäß manchen Ausführungsformen bezieht sich der Begriff "Trockengewicht" auf das Gewicht der pulverförmigen und/oder trockenen Spachtelmasse. In einigen Ausführungsformen bedeutet "pulverförmige Spachtelmasse", dass die Spachtelmasse nicht mit Wasser angemacht wurde.

Der Begriff "selbstnivellierende Spachtelmasse" ist im Kontext der vorliegenden Erfindung nicht besonders limitiert. Gemäß bestimmten Ausführungsformen bezieht sich die "selbstnivellierende Spachtelmasse" auf eine Trockenmischung und/oder Pulvermischung einer Spachtelmasse, bevor diese mit Wasser angemacht wird.

"Spachtelmasse" ist im Rahmen der vorliegenden Erfindung nicht besonders limitiert. In manchen Ausführungsformen ist die Spachtelmasse eine Boden-Spachtelmasse. Gemäß bestimmten Ausführungsformen ist die Spachtelmasse eine Ausgleichsmasse. Insbesondere kann die Spachtelmasse der vorliegenden Erfindung eine CaSO₄-basierte bzw. Calciumsulfat-gebundene Spachtelmasse sein, wie im TKB-Merkblatt 9, Stand Juli 2019, Kapitel 4.1 definiert. Wenn im Kontext der vorliegenden Erfindung der Begriff "Spachtelmasse" verwendet wird, ist damit eine selbstnivellierende Spachtelmasse gemeint.

Der Begriff "Anmachen" ist im Kontext der Erfindung nicht besonders limitiert. Wie allgemein bekannt bezeichnet das Anmachen von Spachtelmassen das Mischen der trockenen Spachtelmasse mit Wasser. Üblicherweise ist die Menge des Wassers zum Anmachen der Spachtelmasse vom Hersteller vorgegeben. Das Wasser zum Anmachen der Spachtelmasse wird auch als "Anmachwasser" oder "Zugabewasser" bezeichnet und bezieht sich auf das Wasser, welches bei der Mischung und Aufbereitung der Spachtelmasse eingebracht werden muss, um diese verarbeitbar zu machen und den Abbindeprozess in Gang zu bringen. Gemäß bestimmten Ausführungsformen sind die Begriffe "Anmachen" und "Anmischen" äquivalent.

Im Rahmen der vorliegenden Erfindung bedeutet die Abkürzung "GWP" "Global Warming Potential", zu Deutsch "Treibhauspotential". Dabei ist der GWP-Wert einer chemischen Verbindung, einer Komponente oder einer Mischung eine Maßzahl für ihren relativen Beitrag zum Treibhauseffekt. Unter GWP wird allgemein die Summe aller aufgenommenen oder emittierten Treibhausgase über die betrachteten Phasen des Produkt-Lebenszyklus verstanden. Dabei werden die Treibhausgas-Flüsse in die gemeinsame Einheit: *kg CO*₂-*Äquivalente*/*kg* umgewandelt und aufsummiert. Die Berechnung des produktspezifischen GWPs erfolgt nach den Rechenregeln des DIN EN 15804:2012+A2:2019 Standards. Dabei können die Lebenszyklusphasen A1 bis A3 der Norm betrachtet und sowohl primäre als auch sekundäre Daten miteinbezogen werden. In einigen Ausführungsformen der vorliegenden Erfindung wird der GWP-Wert gemäß DIN EN 15804:2012+A2:2019 bestimmt.

Der Begriff "Restfeuchtigkeit" bezieht sich im Rahmen der vorliegenden Erfindung auf den Anteil an Wasserdampf oder Feuchtigkeit, der im Fußbodenuntergrund vorhanden ist. Insbesondere kann sich die Restfeuchtigkeit auf den Anteil an Wasserdampf oder Feuchtigkeit beziehen, der im Fußbodenuntergrund nach einer Trocknungsphase des Fußbodenuntergrunds verbleibt. Mit Restfeuchtigkeit ist in diesem Kontext nicht "nachstoßende Feuchtigkeit" gemeint. "Nachstoßende Feuchtigkeit" bedeutet, dass Wasserdampf aus untenliegenden Schichten, wie beispielsweise aus dem erdreichberührten Beton für das Hausfundament, über die angrenzenden, darüberliegenden Schichten, wie beispielsweise dem Estrich, nach oben in die entsprechenden Verlegewerkstoff-Schichten, wie beispielsweise dem Vorstrich, der Spachtelmasse und dem Klebstoff wandern kann. Zusätzlich versteht sich, dass die Beton- oder Estrich-Oberfläche, welche angrenzt an die zu applizierenden darüberliegenden Verlegewerkstoffe, wie beispielsweise der erfindungsgemäßen Spachtelmasse und dem vor der Spachtelung angewandten Vorstrich, kein flüssiges Wasser enthalten darf.

Ein erster Aspekt der Erfindung bezieht sich auf eine selbstnivellierende Spachtelmasse, die im Wesentlichen aus 30 bis 40 Gew.-% eines ersten Bindemittels, 10 bis 20 Gew.-% eines zweiten Bindemittels, 40 bis 59 Gew.-% mindestens eines Füllstoffs und >0 bis 5 Gew.-% Zusatzstoffe und/oder sonstige Bestandteile, basierend auf dem Trockengewicht der Spachtelmasse, besteht. Dabei beträgt das Gewichtsverhältnis des ersten Bindemittels zum zweiten Bindemittel 2 : 1 bis 3,5 : 1. Weiterhin ist das erste Bindemittel α-Calciumsulfat-Halbhydrat (α-CaSO₄ · 0,5 H₂O) und das zweite Bindemittel umfasst 35 bis 50 Gew.-% CaO, 25 bis 45 Gew.-% SiO₂, 2 bis 7 Gew.-% Wasser (H₂O), 0 bis < 1 Gew.-% Fe₂O₃, 0 bis <2 Gew.-% Al₂O₃ und 0 bis <2 Gew.-% SO₃, basierend auf dem Gesamtgewicht des zweiten Bindemittels.

Die Erfinder haben in umfangreichen Studien überraschenderweise herausgefunden, dass durch die oben genannte erfindungsgemäße Zusammensetzung eine Spachtelmasse bereitgestellt wird, die sowohl feuchteresistent als auch dimensionsstabil ist, einen niedrigen GWP-Wert aufweist und selbstnivellierende Eigenschaften besitzt. Dies kann insbesondere durch die spezifische Mischung des ersten und zweiten Bindemittels erreicht werden, wobei auf die Zugabe von Portland-, Calciumaluminat- und Calciumsulfoaluminatzement verzichtet werden kann.

Die "sonstigen Bestandteile" der selbstnivellierenden Spachtelmasse beziehen sich auf Bestandteile, die nicht unter die Kategorien Bindemittel, Füllstoffe oder Zusatzstoffe fallen und üblicherweise in Spachtelmassen und insbesondere Spachtelmassen auf Gips-Basis vorkommen können.

Die Angaben der Bestandteile des zweiten Bindemittels sind so zu verstehen, dass "CaO", "SiO₂", "SO₃" und optional auch "Fe₂O₃" und "Al₂O₃" auf deren Anteile im Bindemittel bezogen sind. Dies bedeutet, dass die genannten Bestandteile zumindest teilweise oder vollständig in einer Verbindung wie z.B. einem Mischoxid oder einer Phase wie z.B. einer C-S-H-Phase gebunden sein können. Demnach können die Bestandteile des zweiten Bindemittels auch als Anteile angegeben werden, z.B. durch die Angaben "35 bis 50 Gew.-% CaO-Anteil", "25 bis 45 Gew.-% SiO₂-Anteil", "0 bis <1 Gew.-% Fe₂O₃-Anteil", "0 bis <2 Gew.-% Al₂O₃-Anteil" und "0 bis <2 Gew.-% SO₃-Anteil".

Der Ausdruck "im Wesentlichen bestehend aus" bedeutet im Rahmen der vorliegenden Erfindung, dass neben den im Anspruch genannten Bestandteilen der Spachtelmasse zusätzliche Komponenten in geringen Mengen vorhanden sein können, solange diese keinen signifikanten Einfluss auf die Funktion und Leistung der erfindungsgemäßen Spachtelmasse haben. Mit "Funktion" und "Leistung" sind insbesondere die selbstnivellierenden Eigenschaften, die Feuchteresistenz und Dimensionsstabilität gemeint. "Geringe Mengen" bedeutet dabei Mengen von höchsten 5 Gew.-%, bevorzugt höchstens 2,5 Gew.-% und weiter bevorzugt höchstens 1 Gew.-%, bezogen auf das Trockengewicht der Spachtelmasse. Insbesondere kann die selbstnivellierende Spachtelmasse aus dem ersten Bindemittel, dem zweiten Bindemittel, dem mindestens einen Füllstoff und den Zusatzstoffen und/oder sonstigen Bestandteilen bestehen, wobei sich die angegebenen Gewichtsprozente (Gew.-%) insgesamt zu 100 Gew.-% addieren, basierend auf dem Trockengewicht der Spachtelmasse.

In einigen Ausführungsformen ist die Spachtelmasse eine Spachtelmasse auf CaSO₄-Basis. In manchen Ausführungsformen besteht die selbstnivellierende Spachtelmasse aus 30 bis 40 Gew.-% des ersten Bindemittels, 10 bis 20 Gew.-% des zweiten Bindemittels, 40 bis 59 Gew.-% des mindestens einen Füllstoffs und >0 bis 5 Gew.-% der Zusatzstoffe und/oder sonstigen Bestandteile, basierend auf dem Trockengewicht der Spachtelmasse, wobei sich die angegebenen Gewichtsprozente (Gew.-%) insgesamt zu 100 Gew.-% addieren. Gemäß bevorzugten Ausführungsformen besteht die Spachtelmasse oder besteht die Spachtelmasse im Wesentlichen aus 33 bis 38 Gew.-%, weiter bevorzugt 35 bis 37 Gew.-% des ersten Bindemittels, 12 bis 18 Gew.-%, weiter bevorzugt 15 bis 17 Gew.-% des zweiten Bindemittels, 42 bis 50 Gew.-%, weiter bevorzugt 43 bis 48 Gew.-% des mindestens einen Füllstoffs und 0,5 bis 4,0 Gew.-%, weiter bevorzugt 1,5 bis 3,5 Gew.% der Zusatzstoffe und/oder sonstigen Bestandteile, basierend auf dem Trockengewicht der Spachtelmasse. Gemäß bevorzugten Ausführungsformen beträgt das Gewichtsverhältnis des ersten Bindemittels zum zweiten Bindemittel 2,1 : 1 bis 2,5 : 1. Bei diesen Ausführungsformen sind die oben genannten Vorteile und Effekte besonders ausgeprägt.

In manchen Ausführungsformen besteht das zweite Bindemittel aus 35 bis 50 Gew.-% CaO, 25 bis 45 Gew.-% SiO₂, 2 bis 7 Gew.-% Wasser (H₂O), 0 bis < 1 Gew.-% Fe₂O₃, 0 bis <2 Gew.-% Al₂O₃ und 0 bis <2 Gew.-% SO₃, basierend auf dem Gesamtgewicht des zweiten Bindemittels. In bevorzugten Ausführungsformen umfasst das zweite Bindemittel oder besteht das zweite Bindemittel aus 35 bis 45 Gew.-%, bevorzugt 37 bis 41 Gew.-% CaO und 35 bis 45 Gew.-%, bevorzugt 37 bis 41 Gew.-% SiO₂, 2,1 bis 5,0 Gew.-%, weiter bevorzugt 2,2 bis 4,0 Gew.-% Wasser, >0 bis < 1 Gew.-%, weiter bevorzugt 0,01 bis 0,5 Gew.-% Fe₂O₃, >0 bis <2 Gew.-%, weiter bevorzugt 1,0 bis 1,8 Gew.-% Al₂O₃ und >0 bis <2 Gew.-%, weiter bevorzugt 0,5 bis 1,0 Gew.-% SO₃, basierend auf dem Gesamtgewicht des zweiten Bindemittels. Wenn das zweite Bindemittel aus den genannten Komponenten bzw. Anteilen bestehet, addieren sich die angegebenen Gewichtsprozente zu 100 Gew.-%, basierend auf dem Gesamtgewicht des zweiten Bindemittels. Bei diesen Ausführungsformen wird die Feuchteresistenz der Spachtelmasse weiter gesteigert und die Dimensionsstabilität weiter verbessert.

In einigen Ausführungsformen wird das zweite Bindemittel hergestellt durch ein Verfahren umfassend Mischen von CaO, CaCO₃ und/oder Ca(OH)₂ mit SiO₂ und/oder silikatischen Materialien zum Erhalt einer Mischung, optional Calcinieren der Mischung bei 700°C bis 800°C zum Erhalt einer calcinierten Mischung, hydrothermales Behandeln der Mischung oder calcinierten Mischung für 2 bis 10 Stunden bei 140°C bis 300°C und optional einem Druck von 16 bis 40 bar zum Erhalt eines Produkts, optional Trocknen des Produkts für 12 bis 16 Stunden bei 60°C bis 90°C zum Erhalt eines getrockneten Produkts und ferner optional Mahlen des Produkts oder getrockneten Produkts zum Erhalt eines Pulvers. Dabei kann das Produkt, das getrocknete Produkt und/oder das Pulver das zweite Bindemittel sein. In bevorzugten Ausführungsformen ist das Pulver das zweite Bindemittel. Die silikatischen Materialien können ausgewählt sein aus der Gruppe bestehend aus Quarz, Silica, Kaolin, Glimmer, Feldspat, Gläser und Kombinationen davon. In bevorzugten Ausführungsformen wird das hydrothermale Behandeln für 4 bis 8 Stunden und/oder bei einer Temperatur von 180°C bis 220°C und/oder einem Druck von 18 bis 25 bar durchgeführt. Weiterhin kann das hydrothermale Behandeln im gesättigtem Wasserdampf durchgeführt werden. Der Schritt des Mahlens kann das Zumischen von Quarzsand zum Produkt oder getrockneten Produkt umfassen. Der Quarzsand kann dabei im Gewichtsverhältnis von 1 : 1 Quarzsand : Produkt oder getrocknetes Produkt zugegeben werden.

Gemäß manchen Ausführungsformen ist das zweite Bindemittel ein Bindemittel auf Calciumhydrosilikat-Basis. In bestimmten Ausführungsformen liegt zumindest ein Teil des CaO, des SiO₂ und des Wassers im zweiten Bindemittel als Calciumhydrosilikat vor. Das Calciumhydrosilikat kann dabei α-Ca₂[HSiO₄]OH, Ca₅[HSi₂O₇]₂·8H₂O und/oder Ca₆[Si₂O₇](OH)₆ umfassen oder aus α-Ca₂[HSiO₄]OH, Ca₅[HSi₂O₇]₂·8H₂O und/oder Ca₆[Si₂O₇](OH)₆ bestehen. Insbesondere kann das Calciumhydrosilikat α-Ca₂[HSiO₄]OH und Ca₆[Si₂O₇](OH)₆ umfassen. Beispielsweise kann ein Teil des CaO, des SiO₂ und des Wassers als Calciumhydrosilikat vorliegen, während ein Teil des CaO und des SiO₂ als nicht umgesetzte Ausgangsprodukte der oben beschriebenen Herstellung des zweiten Bindemittels und ein Teil des Wassers ungebunden und/oder als Restfeuchte vorliegen kann. Ein Teil der Calcium-Atome und der Silicium-Atome der Calciumhydrosilikate können dabei durch Eisen- und/oder Aluminium-Atome ersetzt sein.

Gemäß bestimmen Ausführungsformen besteht das zweite Bindemittel im Wesentlichen aus Calciumhydrosilikaten. Dies bedeutet, dass das zweite Bindemittel in einigen Ausführungsformen einen Gehalt an Calciumhydrosilikaten von mindestens 70 Gew.-%, bevorzugt mindestens 80 Gew.-% und besonderes bevorzugt mindestens 90 Gew.-% aufweist, bezogen auf das Gesamtgewicht des zweiten Bindemittels. Die restlichen Anteile des zweiten Bindemittels können dabei Quarzsand, Calciumoxid und/oder Calciumcarbonat sein. Mit den "restlichen Anteilen" sind die Anteile gemeint, die zusammen mit den genannten Gehalten an Calciumhydrosilikat 100 Gew.-% ergeben, bezogen auf das Gesamtgewicht des zweiten Bindemittels. Die Calciumhydrosilikate können α-Ca₂[HSiO₄]OH, Ca₅[HSi₂O₇]₂·8H₂O und/oder Ca₆[Si₂O₇](OH)₆ umfassen. In manchen Ausführungsformen sind die Calciumhydrosilikate ausgewählt aus der Gruppe bestehend aus α-Ca₂[HSiO₄]OH, Ca₅[HSi₂O₇]₂·8H₂O, Ca₆[Si₂O₇](OH)₆ und Kombinationen davon. Ein Teil der Calcium-Atome und der Silicium-Atome der Calciumhydrosilikate können dabei durch Eisen- und/oder Aluminium-Atome ersetzt sein.

Gemäß manchen Ausführungsformen ist das zweite Bindemittel teilamorph. Dabei bedeutet "teilamorph", dass das zweite Bindemittel einen amorphen Anteil aufweist. Insbesondere kann das zweite Bindemittel aus einem amorphen Anteil und einem kristallinen Anteil bestehen. Der amorphe Anteil kann aus amorphen Phasen und der kristalline Anteil aus kristallinen Phasen bestehen. In einigen Ausführungsformen weist das zweite Bindemittel einen amorphen Anteil von 50 bis 90 Gew.-%, bevorzugt 60 bis 80 Gew.-% und besonderes bevorzugt 70 bis 77 Gew.-% auf, bezogen auf das Gesamtgewicht des zweiten Bindemittels. Das bedeutet, dass das zweite Bindemittel amorphe Phasen in einem Gehalt von 50 bis 90 Gew.-%, bevorzugt 60 bis 80 Gew.-% und besonderes bevorzugt 70 bis 77 Gew.-% aufweisen kann, bezogen auf das Gesamtgewicht des zweiten Bindemittels. Der Gehalt an amorphen Phasen im zweiten Bindemittel bzw. der amorphe Anteil des zweiten Mittels wird mittels Rietveld-Analyse oder, genauer gesagt, mittels Pulverdiffraktometrie und Rietveld-Analyse bestimmt. Bei diesen Ausführungsformen sind die oben genannten Vorteile und Effekte besonders ausgeprägt.

In manchen Ausführungsformen ist die selbstnivellierende Spachtelmasse im Wesentlichen frei von Portlandzement, Calciumaluminatzement und Calciumsulfoaluminatzement. "Im Wesentlichen frei von Portlandzement, Calciumaluminatzement und Calciumsulfoaluminatzement" bedeutet hierbei, dass der Gehalt an Portlandzement, Calciumaluminatzement und Calciumsulfoaluminatzement in der selbstnivellierenden Spachtelmasse höchstens 1 Gew.-%, bevorzugt höchstens 0,5 Gew.-% und besonders bevorzugt höchsten 0,1 Gew.-% beträgt, basierend auf dem Trockengewicht der selbstnivellierenden Spachtelmasse. Gemäß bestimmten Ausführungsformen weist Portlandzement die chemische Zusammensetzung 18-25 Gew.-% SiO₂, 2-6 Gew.-% Al₂O₃, 1-4 Gew.-% Fe₂O₃, 62-69 Gew.-% CaO, 2-5 Gew.-% SO₃ auf, bezogen auf das Gesamtgewicht des Portlandzements. Insbesondere kann Portlandzement die chemische Zusammensetzung 21-24 Gew.-% SiO₂, 3-5 Gew.-% Al₂O₃, 1-2 Gew.-% Fe₂O₃, 63-68 Gew.-% CaO, 3-4 Gew.-% SO₃ oder 19-20 Gew.-% SiO₂, 5-7 Gew.-% Al₂O₃, 2-3 Gew.-% Fe₂O₃, 63-64 Gew.-% CaO, 3-4 Gew.-% SO₃ aufweisen, bezogen auf das Gesamtgewicht des Portlandzements. In einigen Ausführungsformen weist Calciumaluminatzement die chemischen Zusammensetzung 36-44 Gew.-% Al₂O₃, 34-42 Gew.-% CaO, 2-8 Gew.-% SiO₂, 12-20 Gew.-% Fe₂O₃ auf, bezogen auf das Gesamtgewicht des Calciumaluminatzement. Insbesondere kann Calciumaluminatzement die chemischen Zusammensetzung 4-6 Gew.-% SiO₂, 38-42 Gew.-% Al₂O₃, 13-17 Gew.-% Fe₂O₃, 36-40 Gew.-% CaO oder 3-5 Gew.-% SiO₂, 38-42 Gew.-% Al₂O₃, 14-18 Gew.-% Fe₂O₃, 35-38 Gew.-% CaO aufweisen, bezogen auf das Gesamtgewicht des Calciumaluminatzement. Die Calciumaluminatzemente können ferner bis zu 1,5 Gew.-% MgO und bis zu 0,4 Gew.-% SO₃ enthalten, bezogen auf das Gesamtgewicht des jeweiligen Calciumaluminatzements. In bestimmten Ausführungsformen weist Calciumsulfoaluminatzement die chemische Zusammensetzung 5-10 Gew.-% SiO₂, 15-25 Gew.-% Al₂O₃, 1-5 Gew.-% Fe₂O₃, 30-50 Gew.-% CaO, 15-25 Gew.-% SO₃ auf, bezogen auf das Gesamtgewicht des Calciumsulfoaluminatzements. Insbesondere kann Calciumsulfoaluminatzement die chemische Zusammensetzung 6 Gew.-% SiO₂, 22 Gew.-% Al₂O₃, 1 Gew.-% Fe₂O₃, 35 Gew.-% CaO, 16 Gew.-% SO₃ aufweisen, bezogen auf das Gesamtgewicht des Calciumsulfoaluminatzements.

In einigen Ausführungsformen beträgt das Gewichtsverhältnis CaO : SiO₂ in der Spachtelmasse 1 : 1 bis 1,5 : 1. Gemäß bestimmter Ausführungsformen beträgt der Gesamtgehalt an Al₂O₃ in der Spachtelmasse <0,5 Gew.-%, basierend auf dem Trockengewicht der Spachtelmasse. In manchen Ausführungsformen beträgt der Gesamtgehalt an SO₃ in der Spachtelmasse 16,5 bis 24 Gew.-% und bevorzugt 17,0 bis 19,5 Gew.-%, basierend auf dem Trockengewicht der Spachtelmasse. Bei diesen Ausführungsformen sind die oben genannten Vorteile und Effekte besonders ausgeprägt. Dabei sind die Angaben "CaO", "SiO₂", "Al₂O₃" und "SO₃" auf deren Anteile im Bindemittel bezogen. Dies bedeutet, dass die genannten Bestandteile "CaO", "SiO₂", "Al₂O₃" und/oder "SO₃" zumindest teilweise oder vollständig in einer Verbindung wie z.B. Calciumcarbonat oder α-Calciumsulfat-Halbhydrat oder einer Phase wie z.B. einer C-S-H-Phase gebunden sein können. Demnach können die genannten Bestandteile auch als Anteile angegeben werden, z.B. durch die Angabe, dass die Spachtelmasse CaO-Anteile und SiO₂-Anteile in einem Gewichtsverhältnis von CaO : SiO₂ von 1 : 1 bis 1,5 : 1 umfasst und/oder dass der Gesamtgehalt an Al₂O₃-Anteilen in der Spachtelmasse <0,5 Gew.-% beträgt, basierend auf dem Trockengewicht der Spachtelmasse und/oder dass der Gesamtgehalt an SO₃-Anteilen in der Spachtelmasse 16,5 bis 24 Gew.-% und bevorzugt 17,0 bis 19,5 Gew.-% beträgt, basierend auf dem Trockengewicht der Spachtelmasse.

Gemäß bestimmten Ausführungsformen sind die Zusatzstoffe ausgewählt aus der Gruppe bestehend aus Dispersionspulver, Beschleuniger, Verzögerer, Rheologie-Additive, Hydrophobierungsmittel, Luftporenbildner, Entschäumer und Kombinationen davon. In bevorzugten Ausführungsformen sind die Zusatzstoffe eine Kombination aus Dispersionspulver, Verzögerer, Rheologie-Additive und Beschleuniger. In manchen Ausführungsformen ist das Dispersionspulver ausgewählt aus der Gruppe bestehend aus Ethylen-Vinylacetat-Copolymere, Ethylen-Vinylversatat-Copolymere, Styrolacrylate und Kombinationen davon. In bevorzugten Ausführungsformen ist das Dispersionspulver Ethylen-Vinylacetat-Copolymer. In bestimmten Ausführungsformen ist der Beschleuniger ausgewählt aus der Gruppe bestehend aus Alkalihydrogencarbonate, Alkalisulfate, CaSO₄-Dihydrat oder Kombinationen davon. Gemäß bevorzugter Ausführungsformen ist der Beschleuniger ein Alkalihydrogencarbonat. Gemäß bestimmten Ausführungsformen ist der Verzögerer ausgewählt aus der Gruppe bestehend aus Fruchtsäuren, Phosphate, Polyphosphate, Alkaligluconate, Saccharide, Alkali-Tartrate oder Kombinationen davon. Dabei können die Fruchtsäuren Weinsäure oder Zitronensäure sein. In bevorzugten Ausführungsformen ist der Verzögerer Natriumgluconat. In einigen Ausführungsformen ist das Hydrophobierungsmittel ein silanbasiertes Dispersionspulver. Zusätzlich kann das Hydrophobierungsmittel Schutzkolloide auf Polyvinylalkohol-Basis enthalten. Gemäß bestimmten Ausführungsformen ist der Luftporenbildner auf Basis von Olefinsulfonaten. In einigen Ausführungsformen ist der Entschäumer auf Mineralölbasis. Insbesondere kann der Entschäumer Mineralöle enthalten, die auf einem anorganischen Trägermaterial wie beispielsweise CaCO₃ geträgert sind. Weiterhin kann der Entschäumer Polyehtlyenglycol enthalten. Gemäß bestimmten Ausführungsformen sind die Rheologie-Additive ausgewählt aus der Gruppe bestehend aus Verdicker, Verflüssiger und Kombinationen davon. Insbesondere können die Rheologie-Additive eine Kombination aus Verdicker und Verflüssiger sein. In manchen Ausführungsformen ist der Verflüssiger ein Kammpolymer auf Basis von Poly(meth)acrylsäure mit Polyethylenoxidseitenketten (PCEs, Polycarboxylatether). In bevorzugten Ausführungsformen ist der Verflüssiger Polycarboxylatether. Gemäß einiger Ausführungsformen ist der Verdicker ein Amid-basierter Polyelektrolyt mit Sulfonsäuregruppen. Bei diesen Ausführungsformen sind die oben genannten Vorteile und Effekte besonders ausgeprägt.

In einigen Ausführungsformen enthält die selbstnivellierende Spachtelmasse als Zusatzstoffe 0,1 bis 3,0 Gew.-%, bevorzugt 0,5 bis 2,7 Gew.-% und weiter bevorzugt 1,0 bis 2,5 Gew.-% Dispersionspulver, 0,05 bis 2,00 Gew.-%, bevorzugt 0,10 bis 1,00 Gew.-% und weiter bevorzugt 0,20 bis 0,60 Gew.-% Beschleuniger, 0,01 bis 0,50 Gew.-%, bevorzugt 0,02 bis 0,10 Gew.-% und weiter bevorzugt 0,03 bis 0,09 Gew.-% Verzögerer, 0,1 bis 1,0 Gew.-%, bevorzugt 0,2 bis 0,8 Gew.-% und weiter bevorzugt 0,4 bis 0,6 Gew.-% Rheologie-Additive, basierend auf dem Trockengewicht der selbstnivellierenden Spachtelmasse.

Gemäß bestimmten Ausführungsformen sind die Füllstoffe ausgewählt aus der Gruppe bestehend aus Sand, Kalksteinmehl, Dolomit und Kombinationen davon. In bevorzugten Ausführungsformen sind die Füllstoffe ausgewählt aus der Gruppe bestehend aus Sand, Kalksteinmehl und Kombinationen davon. Gemäß weiter bevorzugten Ausführungsformen sind die Füllstoffe eine Kombination aus Sand und Kalksteinmehl. Dabei kann der Sand Quarzsand sein und/oder eine Partikelgröße von 0,06 bis 0,5 mm aufweisen. In manchen Ausführungsformen hat das Kalksteinmehl eine Partikelgröße von 0 bis 90 µm. In bestimmten Ausführungsformen werden die Partikelgröße des Sandes und/oder des Kalksteinmehls über Siebrückstände bestimmt. Durch diese Ausführungsformen werden die anwendungstechnischen Eigenschaften der Spachtelmasse weiter verbessert.

In bestimmten Ausführungsformen weist die selbstnivellierende Spachtelmasse eine Auslaufzeit von höchstens 70 s und/oder ein Ausbreitmaß von mindestens 11 cm auf, gemessen mit einem Auslaufbecher mit einer 6 mm Düse. Insbesondere kann der Auslaufbecher ein Auslaufbecher gemäß der DIN 53211:1987-06 mit einer 6 mm Düse sein. Gemäß einigen Ausführungsformen wird die Auslaufzeit gemäß DIN 53211:1987-06 bestimmt, wobei statt den in der DIN 53211:1987-06 gemessenen Lacke, Anstrichstoffe und ähnliche Beschichtungsstoffe eine angemachte Spachtelmasse eingesetzt wird und wobei ein Auslaufbecher mit einer 6 mm Düse verwendet wird. In einigen Ausführungsformen wird eine angemachte Spachtelmasse dadurch erhalten, dass die trockene Spachtelmasse mit 18 bis 22 Gew.-% Wasser gemischt wird, bezogen auf das Trockengewicht der Spachtelmasse, optional wobei die dadurch erhaltene Mischung für 30 bis 60 s, insbesondere 45 s, mit einem Laborrührer bei 18 bis 20 °C homogenisiert wird. Dabei bedeutet "trocken", dass die Spachtelmasse nicht mit Wasser angemacht wurde. Gemäß bestimmten Ausführungsformen wird der Auslaufbecher nach 30 Sekunden (s), nachdem die Spachtelmasse angemacht wurde, mit der angemachten Spachtelmasse befüllt. Dies bedeutet, dass 30 s zwischen dem Anmachen der Spachtelmasse und dem Befüllen des Auslaufbechers abgewartet wird. In einigen Ausführungsformen wird der Auslauf der angemachten Spachtelmasse aus dem Auslaufbecher 15 s nach dem Befüllen des Auslaufbechers mit der angemachten Spachtelmasse gestartet. Der Start des Auslaufs der angemachten Spachtelmasse wird im Kontext der vorliegenden Erfindung auch als "Fließstart" bezeichnet. Insbesondere kann die Auslaufzeit nach der im untenstehenden Absatz "Bestimmung der Auslaufzeit (in Sekunden (s)) und des Ausbreitmaßes (in Zentimeter (cm))" bestimmt werden.

Gemäß manchen Ausführungsformen wird das Ausbreitmaß im Anschluss an die Bestimmung der Auslaufzeit bestimmt, wobei das Ausbreitmaß der Spachtelmasse 4 min nach Fließstart bestimmt wird. In bestimmten Ausführungsformen wird das Ausbreitmaß dadurch bestimmt, dass die Bestimmung der Auslaufzeit wie oben beschrieben durchgeführt wird, wobei die Spachtelmasse, die durch den Auslaufbecher fließt, auf einer mit Millimeterpapier bedeckten Platte aufgefangen wird und 4 min nach dem Fließstart der Auslaufradius, den die aufgefangene Spachtelmasse auf der Glasplatte bedeckt, anhand des Millimeterpapiers abgelesen wird. Insbesondere kann das Ausbreitmaß nach der im untenstehenden Absatz "Bestimmung der Auslaufzeit (in Sekunden (s)) und des Ausbreitmaßes (in Zentimeter (cm))" bestimmt werden.

Gemäß manchen Ausführungsformen ist die selbstnivellierende Spachtelmasse feuchteresistent. Im Sinne dieser Erfindung gilt eine Spachtelmasse als feuchteresistent, wenn die Werte der Haftzug-, Biegezug- und Druckfestigkeiten der Spachtelmasse nach Feuchtelagerung (100% r.F., 23°C) für 28 Tage nicht mehr als 20% von den Werten der Haftzug-, Biegezug- und Druckfestigkeiten der Spachtelmasse nach Normallagerung (50% r.F. 23°C) für 28 Tage abweichen. Insbesondere bedeutet dabei "abweichen", dass sich die Werte der Haftzug-, Biegezug- und Druckfestigkeiten der Spachtelmasse nach Feuchtelagerung für 28 Tage nicht mehr als 20% im Vergleich zu den Werten der Haftzug-, Biegezug- und Druckfestigkeiten der Spachtelmasse nach Normallagerung für 28 Tage reduzieren. Dabei wird für eine Normallagerung ein prismatischer Prüfkörper nach DIN EN 13892-1:2003-02 hergestellt und bei 23°C und 50% r.F. gelagert und für eine Feuchtelagerung ein prismatischer Prüfkörper nach DIN EN 13892-1:2003-02 hergestellt und bei 23°C und 100% r.F. gelagert. In einigen Ausführungsformen weist die Spachtelmasse nach 28 Tagen Feuchtelagerung eine Biegezugfestigkeit von mindestens 7 N/mm², eine Druckfestigkeit von mindestens 30 N/mm² und eine Haftzugfestigkeit von mindestens 1 N/mm² auf. Eine ausführliche Beschreibung der Bestimmungsmethoden für die Haftzug-, Biegezug- und Druckfestigkeiten nach Feuchte- und Normallagerung ist weiter unten gegeben.

In bestimmten Ausführungsformen ist die selbstnivellierende Spachtelmasse dimensionsstabil. Im Sinne dieser Erfindung gilt eine Spachtelmasse als dimensionsstabil, wenn die Spachtelmasse eine Längenänderung nach Normallagerung für 28 Tage von < |0,3| mm/m und eine Längenänderung nach Feuchtelagerung für 28 Tage von < |0,3| mm/m aufweist. Dabei wird für eine Normallagerung ein prismatischer Prüfkörper nach DIN EN 13892-1:2003-02 hergestellt und bei 23°C und 50% r.F. gelagert und für eine Feuchtelagerung ein prismatischer Prüfkörper nach DIN EN 13892-1:2003-02 hergestellt und bei 23°C und 100% r.F. gelagert. Eine ausführliche Beschreibung der Bestimmungsmethode der Längenänderung nach Feuchte- und Normallagerung ist weiter unten gegeben.

Ein zweiter Aspekt der vorliegenden Erfindung bezieht sich auf eine selbstnivellierende Spachtelmasse, die 30 bis 40 Gew.-% eines ersten Bindemittels, 10 bis 20 Gew.-% eines zweiten Bindemittels, 40 bis 59 Gew.-% mindestens eines Füllstoffs und >0 bis 5 Gew.-% Zusatzstoffe und/oder sonstige Bestandteile, basierend auf dem Trockengewicht der Spachtelmasse, umfasst. Dabei beträgt das Gewichtsverhältnis des ersten Bindemittels zum zweiten Bindemittel 2 : 1 bis 3,5 : 1. Weiterhin ist das erste Bindemittel α-Calciumsulfat-Halbhydrat und das zweite Bindemittel umfasst 35 bis 50 Gew.-% CaO, 25 bis 45 Gew.-% SiO₂, 2 bis 7 Gew.-% Wasser (H₂O), 0 bis < 1 Gew.-% Fe₂O₃, 0 bis <2 Gew.-% Al₂O₃ und 0 bis <2 Gew.-% SO₃, basierend auf dem Gesamtgewicht des zweiten Bindemittels. Außerdem ist die selbstnivellierende Spachtelmasse im Wesentlichen frei von Portlandzement, Calciumaluminatzement und Calciumsulfoaluminatzement. Auf die obigen Ausführungen zum ersten Aspekt der Erfindung, die hier analog gelten, wird vollumfänglich Bezug genommen.

Ein dritter Aspekt der vorliegenden Erfindung bezieht sich auf eine selbstnivellierende Spachtelmasse, die CaO und SiO₂ in einem Gewichtsverhältnis CaO : SiO₂ von 1:1 bis 1:1,5, Al₂O₃ in einer Menge von <0,5 Gew.-% und SO₃ in einer Menge von 16,5 bis 24 Gew.-% aufweist. Gemäß bestimmter Ausführungsformen umfasst die selbstnivellierende Spachtelmasse oder besteht die selbstnivellierende Spachtelmasse im Wesentlichen aus 30 bis 40 Gew.-% eines ersten Bindemittels, 10 bis 20 Gew.-% eines zweiten Bindemittels, 40 bis 59 Gew.-% mindestens eines Füllstoffs und >0 bis 5 Gew.-% Zusatzstoffe und/oder sonstige Bestandteile, basierend auf dem Trockengewicht der Spachtelmasse. Dabei kann das Gewichtsverhältnis des ersten Bindemittels zum zweiten Bindemittel 2 : 1 bis 3,5 : 1 betragen. Weiterhin kann das erste Bindemittel α-Calciumsulfat-Halbhydrat sein. Das zweite Bindemittel kann 35 bis 50 Gew.-% CaO, 25 bis 45 Gew.-% SiO₂, 2 bis 7 Gew.-% Wasser (H₂O), 0 bis < 1 Gew.-% Fe₂O₃, 0 bis <2 Gew.-% Al₂O₃ und 0 bis <2 Gew.-% SO₃ umfassen, basierend auf dem Gesamtgewicht des zweiten Bindemittels. Außerdem kann die selbstnivellierende Spachtelmasse im Wesentlichen frei von Portlandzement, Calciumaluminatzement und Calciumsulfoaluminatzement sein. In manchen Ausführungsformen ist die Spachtelmasse des dritten Aspekts eine Spachtelmasse gemäß des ersten und/oder zweiten Aspekts der vorliegenden Erfindung. Auf die obigen Ausführungen zum ersten und zweiten Aspekt der Erfindung, die hier analog gelten, wird vollumfänglich Bezug genommen.

Ein vierter Aspekt der vorliegenden Erfindung bezieht sich auf die Verwendung der Spachtelmasse gemäß des ersten und/oder zweiten und/oder dritten Aspekts der vorliegenden Erfindung zum Nivellieren von Fußbodenuntergründen mit einer Restfeuchtigkeit bis 5 CM% oder 99% relative Feuchte (r.F.). Insbesondere kann die Spachtelmasse gemäß dem ersten Aspekt zum Nivellieren von Fußbodenuntergründen mit einer Restfeuchtigkeit bis 5 CM% oder 99% r.F. in Innenräumen verwendet werden. In bevorzugten Ausführungsformen beträgt die Restfeuchtigkeit 4 bis 5 CM% oder 90% r.F. bis 99% r.F.. Hierbei versteht sich, dass eine Beton- oder Estrich-Oberfläche, welche angrenzt an die zu applizierenden, darüberliegenden Verlegewerkstoffe, wie beispielsweise der erfindungsgemäßen Spachtelmasse und/oder dem vor der Spachtelung angewandten Vorstrich, kein flüssiges Wasser enthalten darf. In manchen Ausführungsformen ist der Fußbodenuntergrund ein Betonboden. Gemäß bestimmten Ausführungsformen ist der Fußbodenuntergrund ein Estrich. In einigen Ausführungsformen ist der Fußbodenuntergrund ein Estrich, der auf einem Betonboden aufgebracht wurde. Der Begriff "Betonboden" ist im Kapitel 2.3 des TKB-Merkblatts 8, Beurteilen und Vorbereiten von Untergründen für Bodenbelag- und Parkettarbeiten, Stand März 2023 definiert. Der Begriff "Estrich" ist im Kapitel 2.1 des TKB-Merkblatts 8, Beurteilen und Vorbereiten von Untergründen für Bodenbelag- und Parkettarbeiten, Stand März 2023 definiert. Diese Definitionen können im Kontext der vorliegenden Erfindung herangezogen werden. Wenn der Fußbodenuntergrund ein Estrich ist, der optional auf einem Betonboden aufgebracht wurde, kann die Restfeuchtigkeit in CM% nach der CM-Methode gemessen. Insbesondere kann die Restfeuchtigkeit in CM% in diesem Fall gemäß TKB-Merkblatt 16, Anerkannte Regeln der Technik bei der CM-Messung, Stand März 2016 bestimmt werden. Wenn der Fußbodenuntergrund ein Estrich ist, der optional auf einem Betonboden aufgebracht wurde, kann die Restfeuchtigkeit in % r.F. nach der korrespondierenden Luftfeuchtigkeitsmethode, abgekürzt KRL-Methode, gemessen werden. Insbesondere kann die Restfeuchtigkeit in % r.F. in diesem Fall gemäß TKB-Merkblatt 18, KRL-Methode - Messung und Beurteilung der Feuchte von mineralischen Estrichen, Stand Februar 2021 bestimmt werden. Wenn der Fußbodenuntergrund ein Betonboden ist, kann die Restfeuchtigkeit in % r.F. gemäß ASTM F2170-11 bestimmt werden. Wie oben beschrieben ist die erfindungsgemäße Spachtelmasse feuchteresistent und dimensionsstabil und ist somit hervorragend für den Einsatz auf Fußbodenuntergründen mit hoher Restfeuchtigkeit geeignet. Auf die obigen Ausführungen zum ersten, zweiten und dritten Aspekt der Erfindung, die hier analog gelten, wird vollumfänglich Bezug genommen.

### Herstellungsverfahren der selbstnivellierenden Spachtelmasse

Die Herstellung der erfindungsgemäßen selbstnivellierenden Spachtelmasse kann durch sukzessives Vermischen der oben genannten Bestandteile der erfindungsgemäßen selbstnivellierenden Spachtelmasse in beliebiger Reihenfolge oder durch gleichzeitiges Vermischen in einer für diese Zwecke üblichen Mischvorrichtung erfolgen. Mit den Bestandteilen sind insbesondere erstes Bindemittel, zweites Bindemittel, Füllstoffe, und Zusatzstoffe gemeint. Die obigen Ausführungen zum ersten Aspekt der Erfindung gelten hier analog.

### Herstellungsverfahren des zweiten Bindemittels

Die Herstellung des zweiten Bindemittels kann beispielsweise nach folgendem Verfahren erfolgen. Als Ausgangsstoffe werden Kalkstein (Calciumcarbonat, CaCO₃), Calciumhydroxid (Ca(OH)₂) und/oder Calciumoxid (CaO) und Siliciumdioxid (SiO₂) und/oder silikatische Materialien wie z.B. Kaolin im gewünschten Verhältnis gemischt und bei ca. 700°C bis 800°C calciniert. Das calcinierte Material wird anschließend einer hydrothermalen Behandlung unterzogen. Die hydrothermale Behandlung kann für 2 bis 10 Stunden bei 180°C bis 220°C und gesättigtem Wasserdampf mit ggf. einem Druck von 16 bis 40 bar erfolgen. Nach der hydrothermalen Behandlung wird das Produkt getrocknet (z.B. für 12 bis 36 Stunden bei 60°C bis 90°C in einem Trockenofen) und ggf. zu einem Pulver gemahlen.

### Bestimmung der Auslaufzeit (in Sekunden (s)) und des Ausbreitmaßes (in Zentimeter (cm))

Zur Bestimmung der Auslaufzeit und des Ausbreitmaßes können ein Auslaufbecher aus Aluminium der Firma Erichsen, Modell 243/II, mit einer 6 mm Düse, eine Stoppuhr mit Sekundenanzeige, eine Glasplatte 30x30 cm oder größer, Millimeterpapier, ein 500 ml Anrührgefäß und ein Vollrath-Laborrührer EWTHV 0,5 mit Scheibenrührer, Durchmesser ca. 65 mm eingesetzt werden. Das Millimeterpapier sollte wassergeschützt sein (Schutzhülle oder laminiert). Zur vereinfachten Ablesbarkeit sollten im Abstand von 1 cm konzentrische Kreise gezogen und mit Angabe des entsprechenden Radius auf dem Millimeterpapier eingezeichnet werden. Der Auslaufbecher kann auf einem Stativ in einer Höhe von 17,5 cm fixiert werden, was 11 cm Fallhöhe für das angerührte Material entspricht. Der Fuß des Statives sollte außerhalb der darunterliegenden Glasplatte sein, damit genug Fläche zum Ausbreiten der Spachtelmasse vorhanden ist. Dann können 500 g Spachtelmasse mit 19 bis 21,5 Gew.-% Wasser, basierend auf dem Trockengewicht der Spachtelmasse, in das Anrührgefäß gegeben und anschließend 45 s mit dem Laborrührer homogenisiert (Mischtemperatur ca. 18-20°C) werden. Anschließend kann wie folgt vorgegangen werden: In ein Stativ, welches auf der Arbeitsfläche steht, wird der Auslaufbecher eingehängt. Ein Millimeterpapier wird daruntergelegt (die Mitte des Papiers muss sich senkrecht unter der Düse befinden). Darauf wird eine trockene Glasplatte gelegt. 30 s nach dem Anmachen der Spachtelmasse wird der Auslaufbecher bis zum Rand befüllt, dessen Auslaufdüse mit einem Finger verschlossen wird. Überschüssiges Material wird mit einer kleinen Glasplatte oder einem Spatel abgestreift. Nach weiteren 15 s seit Beginn des Befüllens, insgesamt nach 45 s nach Anmachen der Spachtelmasse, erfolgt der "Fließstart": Der Finger wird von der Düsenöffnung entfernt und gleichzeitig mit der anderen Hand eine Stoppuhr gestartet. Nun wird beobachtet, wie lange die Masse aus dem Becher fließt. Kommt es zu einem deutlichen Abriss des Auslaufflusses, wird die Stoppuhr gestoppt. Diese Zeit des Fadenabrisses entspricht der Auslaufzeit.

Anschließend an die beschriebene Durchführung der Bestimmung der Auslaufzeit kann zur Messung des Ausbreitmaßes 4 min nach dem Fließstart der Auslaufradius, den die aufgefangene Spachtelmasse auf der Glasplatte bedeckt, anhand des Millimeterpapiers abgelesen werden. Der Auslaufradius wird an vier um ca. 90° versetzten Positionen abgelesen und gemittelt (Ablesegenauigkeit 1 mm). Der Mittelwert wird auf ganze mm abgerundet.

### Bestimmung der Biegezug- und Druckfestigkeiten (in Newton pro Quadratmillimeter (N/mm²)) bei Normal- und Feuchtelagerung

Zur Bestimmung der Biegezug- und Druckfestigkeit wurden prismatische Prüfkörper (Maße: 4 cm * 4 cm * 16 cm) nach DIN EN 13892-1:2003-02 hergestellt und die Festigkeiten nach 28 Tagen Normal- bzw. Feuchtelagerung nach DIN EN 13892-2:2003-02 bestimmt. Unter Normlagerung wird die Lagerung bei 23°C und 50% rH verstanden. Für die Feuchtelagerung werden die Prismen nach DIN EN 13892-1: 2003-02 hergestellt und 24 h später in einem sie vollständig umgebenden Wasserbad eingelagert (23°C, 100% rH).

### Bestimmung der Haftzugfestigkeit (in Newton pro Quadratmillimeter (N/mm²)) bei Normal- und Feuchtelagerung

Die Bestimmung der Haftzugfestigkeiten bei Normlagerung (23°C / 50% rH) wurde nach DIN EN 13408:2002-06 durchgeführt. Dazu wurde eine Betonplatte (40 cm * 40 cm * 5 cm) mit einer Dispersionsgrundierung (z.B. UZIN PE 360) grundiert und ca. 1,5 h später in 3 mm Schichtstärke mit der Spachtelmasse gespachtelt. Nach sieben Tagen Trocknungszeit der Spachtelmasse wurden die Haftzugfestigkeiten bestimmt. Hierfür wurden 50 mm * 50 mm Metallstempel mittels 2K-Epoxi-Mörtel auf die Spachtelmassenoberfläche (z.B. Codex X-Tensive) verklebt und 24 h später die Haftzugfestigkeit mit einem geeigneten Zugprüfgerät (z.B. Firma BPS Freundl, Wennigsen Typ Easy-M) bestimmt.

Zur Ermittlung der Haftzugfestigkeit bei Feuchtelagerung wurde eine durch siebentägige Wasserlagerung konditionierte Betonplatte (23°C / 100% rH) aus dem Wasser genommen, an der Oberfläche mit einem Handtuch abgetrocknet und eine Stunde später mit einer Dispersionsgrundierung (z.B. UZIN PE 360) grundiert. Nach einer weiteren Stunde Trocknungszeit wurde in 3 mm Schichtstärke die angemachte Spachtelmasse aufgebracht. Nach 24h wurde die gespachtelte Oberfläche, sowie die Ränder der Betonplatte mit einer Epoxidharzgrundierung (z.B. UZIN PE 460) abgesperrt und die Oberfläche abgesandet (z.B. UZIN Perlsand) um eine ausreichende Haftung für die aufzuklebenden Haftzugstempel zu erreichen. Die Unterseite der Platte wird nach der 24-stündigen Erhärtung der Epoxidharzgrundierung (Versiegelung) ca. 3 cm tief in Wasser gestellt, sodass eine sich anstauende Dauerfeuchtebelastung auf die Spachtelmasse einwirkt. Über die Lagerdauer von 28 Tagen ist darauf zu achten, dass die Betonplatte durchwegs 3 cm tief in Wasser steht.

Nach 28 Tagen werden 50 mm * 50 mm Metallstempel mittels 2K-Epoxi-Mörtel (z.B. Codex X-Tensive) auf die Spachtelmassenoberfläche verklebt und die Haftzugfestigkeit mit einem geeigneten Zugprüfgerät (z.B. Firma BPS Freundl, Wennigsen Typ Easy-M) bestimmt.

### Bestimmung der Längenänderung (in Millimeter pro Meter (mm/m)) bei Normal- und Feuchtelagerung

Die Messung erfolgt nach DIN EN 13872:2004-04 mit einer der darin beschriebenen Messvorrichtung. Die Prüfkörper werden 24 h nach ihrer Herstellung bei Normklima (23°C 50% rH) entschalt, der 0-Wert gemessen und anschließend wie bei der Biegzug- und Druckprüfung beschriebenen Normal- bzw. Feuchtelagerung, für 28 Tage gelagert. Verwendet wurden prismatische Prüfkörper mit den Maßen 4 cm * 4 cm * 16 cm, anstelle von 1 cm * 4 cm * 16 cm messenden Prüfkörpern.

### Bestimmung des GWP-Werts (in kg CO₂-Äquivalente/kg)

Die Bestimmung des GWP-Wertes der Spachtelmassen erfolgte gemäß DIN EN 15804:2012+A2:2019. Für das zweite Bindemittel wurde ein PCF ("Product Carbon Footprint") von 0,615 kg CO₂-Äquivalente/kg Produkt angenommen.

### Beispiele

Die Erfindung wird im Anschluss mit Bezug auf verschiedene Beispiele davon weiter im Detail erläutert. Die Erfindung ist jedoch nicht auf diese Beispiele beschränkt.

### Herstellung selbstnivellierender Spachtelmassen

In Tabelle 1 sind Rezepturen von selbstnivellierenden Spachtelmassen angegeben. Beispiel 1 ist eine beispielhafte Rezeptur einer erfindungsgemäßen Spachtelmasse. Die Vergleichsbeispiele 1 und 2 beziehen sich auf kommerziell erhältliche selbstnivellierende Spachtelmasse auf Gips- oder Zement-Basis und stellen somit den Stand der Technik dar. Als erstes Bindemittel wurde α-Calciumsulfat-Halbhydrat eingesetzt. Das zweite Bindemittel hatte folgende Zusammensetzung: 39,43 Gew.-% CaO, 38,86 Gew.-% SiO₂, 0,18 Gew.-% Fe₂O₃, 1,69 Gew.-% Al₂O₃, 0,71 Gew.-% SO₃, bezogen auf das Gesamtgewicht des zweiten Bindemittels. Die Angaben in Tabelle 1 sind in Gewichtsprozent (Gew.-%), bezogen auf das Trockengewicht der jeweiligen Spachtelmasse.

**Tabelle 1: Zusammensetzungen von beispielhaften selbstnivellierenden Spachtelmassen. Die Angaben sind in Gewichtsprozent (Gew.-%), bezogen auf das Trockengewicht der jeweiligen Spachtelmasse.**

| **Komponenten** | **Beispiel 1** | **Vergleichsbeispiel 1** | **Vergleichsbeispiel 2** |
|---|---|---|---|
| Tonerdeschmelzzement | 0 | 2,5 | 8,5 |
| Portlandzement | 0 | 0,9 | 25 |
| Erstes Bindemittel | 36 | 45 | 2,5 |
| Zweites Bindemittel | 16 | 0 | 0 |
| Kalksteinmehl 0 - 90 µm | 22,5 | 30,6 | 15,74 |
| Quarzsand 0,06 - 0,5 mm | 23,04 | 18,54 | 46,3 |
| Dispersionspulver | 1,5 | 1,5 | 1,2 |
| Beschleuniger | 0,4 | 0,4 | 0,2 |
| Verzögerer | 0,06 | 0,06 | 0,06 |
| Rheologie-Additive | 0,5 | 0,5 | 0,5 |
| Summe | 100 | 100 | 100 |
| Anmachwasser | 21 | 22 | 20 |

### Prüfung der Feuchtigkeitsresistenz und Dimensionsstabilität der Spachtelmassen

Die Biegezug-, Druck- und Haftzugfestigkeiten sowie die Längenänderungen der Spachtelmassen des Beispiels 1 und der Vergleichsbeispiele 1 und 2 wurden jeweils nach 28 Tagen bei Normal- und Feuchtelagerung nach den oben ausführlich beschriebenen Bestimmungsmethoden bestimmt. Die Menge an eingesetztem Anmachwasser ist für jede Spachtelmasse aus der Tabelle 1 ersichtlich. Die GWP-Werte der Spachtelmassen des Beispiels 1 und des Vergleichsbeispiels 2 wurden nach oben angegebener Methode bestimmt. Die Ergebnisse sind in Tabelle 2 dargestellt.

**Tabelle 2: Darstellung der Biegezug-, Druck- und Haftzugfestigkeiten sowie Dimensionsänderungen der Spachtelmassen des Beispiels 1 und der Vergleichsbeispiele 1 und 2 bei Normal- und Feuchtelagerung nach 28 Tagen. Die prozentuale Abweichung zwischen Norm- und Feuchtelagerung ist in den Klammern dargestellt. Ferner sind die GWP-Werte der Spachtelmassen des Beispiels 1 und des Vergleichsbeispiels 2 angegeben.**

| | **Beispiel 1** | **Vergleichsbeispiel 1** | **Vergleichsbeispiel 2** |
|---|---|---|---|
| Biegezugfestigkeit [N/mm²] nach 28 Tagen Normallagerung (23°C / 50 % r.H.) | 7 | 7 | 7 |
| Biegezugfestigkeit [N/mm²] nach 28 Tagen Feuchtelagerung (23°C/ 100% r.H.) | 7 (0%) | 2,4 (-66%) | 7 (0%) |
| Druckfestigkeit [N/mm²] nach 28 Tagen Normallagerung (23°C / 50 % r.H.) | 35 | 35 | 32 |
| Druckfestigkeit [N/mm²] nach 28 Tagen Feuchtelagerung (23°C/ 100% r.H.) | 32 (-8,5%) | 15 (-57%) | 40 (+25%) |
| Haftzugfestigkeit [N/mm²] nach 28 Tagen Normallagerung (23°C / 50 % r.H.) | 2,0 | 1,8 | 1,8 |
| Haftzugfestigkeit [N/mm²] nach 28 Tagen Feuchtelagerung (23°C/ 100% r.H.) | 2,0 (0%) | 0,1 (-95%) | 1,8 (0%) |
| Längenänderung [mm/m] nach 28 Tagen Normallagerung (23°C / 50 % r.H.) | \|0,198\| | \|0,063\| | \|0,288\| |
| Längenänderung [mm/m] nach 28 Tagen Feuchtelagerung (23°C/ 100% r.H.) | \|0,177\| | \|0,723\| | \|0,140\| |
| GWP [kg CO₂-Äq/kg] | 0,24 | - | 0,36 |

Wie oben bereits erwähnt wird eine Spachtelmasse als feuchteresistent und dimensionsstabil bezeichnet, wenn insbesondere folgende Kriterien erfüllt sind:
- Eine Biegezug- und Druckfestigkeitsklasse von mindestens C30 F7, sowohl bei Normal- als auch Feuchtelagerung, wobei die Abweichungen der Werte der Biegezug- und Druckfestigkeiten zwischen den beiden Lagerungsarten ≤ 20% betragen.
- Haftzugfestigkeiten ≥ 1,0 N/mm², sowohl bei Normal- als auch Feuchtelagerung, wobei die Abweichungen der Werte der Haftzugfestigkeiten zwischen den beiden Lagerungsarten ≤ 20% betragen.
- Längenänderung Δl < |0,3| mm/m, sowohl bei Normal- als auch Feuchtelagerung.

Wie aus Tabelle 2 ersichtlich ist, erleiden konventionelle Gips-Spachtelmassen wie die des Vergleichsbeispiels 1 unter Feuchtigkeitseinwirkung einen Verlust von 50-70% hinsichtlich Biegzug- und Druckfestigkeit und eine Reduktion von über 90% bei den Haftzugfestigkeiten. Auch neigen konventionelle Gips-Spachtelmassen unter Feuchtigkeitseinfluss zu Längenänderungen von > |0,3| mm/m. Bessere Feuchtigkeits- und Dimensionsstabilitäten können durch zementäre Spachtelmassen wie die des Vergleichsbeispiels 2 erreicht werden.

Die Daten aus Tabelle 2 zeigen, dass die Erfindung erstmalig eine Spachtelmasse mit Hauptbindemittel Calciumsulfat bereitstellt, die ohne Portland-, Calciumaluminat- oder Calciumsulfoaluminatzement unter Feuchteeinwirkung dimensionsstabil ist und keiner signifikanten Reduktion von Biegezug- Druck- oder Haftzugfestigkeit unterliegt. Spachtelmassen auf Gips-Basis aus dem Stand der Technik werden aufgrund ihrer feuchtigkeitsbedingten Schadensanfälligkeit nicht für Feuchträume oder auf dauerfeuchten Untergründen empfohlen. Die erfindungsgemäßen Spachtelmassen eröffnen nun erstmalig Anwendungsgebiete für Räume mit Feuchtebelastung, ohne zementhaltige Spachtelmassen einsetzen zu müssen.

Ferner zeigen die Daten aus Tabelle 2, dass die erfindungsgemäße Spachtelmasse einen um 33% geringeren GWP-Wert als die Spachtelmasse des Vergleichsbeispiels 2 aufweist. Somit stellt die Erfindung eine feuchtigkeitsresistente und dimensionsstabile Spachtelmasse mit geringem GWP-Wert bereit.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

## Patentansprüche

1. Selbstnivellierende Spachtelmasse, im Wesentlichen bestehend aus
30 bis 40 Gew.-% eines ersten Bindemittels;
10 bis 20 Gew.-% eines zweiten Bindemittels;
40 bis 59 Gew.-% mindestens eines Füllstoffs; und
>0 bis 5 Gew.-% Zusatzstoffe und/oder sonstige Bestandteile, basierend auf dem Trockengewicht der selbstnivellierenden Spachtelmasse,
wobei das Gewichtsverhältnis des ersten Bindemittels zum zweiten Bindemittel 2 : 1 bis 3,5 : 1 beträgt, und
wobei das erste Bindemittel α-Calciumsulfat-Halbhydrat ist und das zweite Bindemittel Folgendes umfasst:
35 bis 50 Gew.-% CaO;
25 bis 45 Gew.-%, SiO₂;
2 bis 7 Gew.-% Wasser;
0 bis < 1 Gew.-% Fe₂O₃;
0 bis <2 Gew.-% Al₂O₃; und
0 bis <2 Gew.-% SO₃, basierend auf dem Gesamtgewicht des zweiten Bindemittels.

2. Selbstnivellierende Spachtelmasse nach Anspruch 1, wobei zumindest ein Teil des CaO, des SiO₂ und des Wassers im zweiten Bindemittel als Calciumhydrosilikat vorliegt.

3. Selbstnivellierende Spachtelmasse nach Anspruch 1 oder 2, wobei das zweite Bindemittel im Wesentlichen aus Calciumhydrosilikaten besteht.

4. Selbstnivellierende Spachtelmasse nach einem der vorstehenden Ansprüche, wobei die Spachtelmasse im Wesentlichen frei von Portlandzement, Calciumaluminatzement und Calciumsulfoaluminatzement ist.

5. Selbstnivellierende Spachtelmasse nach einem der vorstehenden Ansprüche, wobei das Gewichtsverhältnis CaO : SiO₂ in der Spachtelmasse 1 : 1 bis 1,5 : 1 beträgt.

6. Selbstnivellierende Spachtelmasse nach einem der Ansprüche 1 bis 4, wobei das zweite Bindemittel 35 bis 45 Gew.-% CaO und 35 bis 45 Gew.-% SiO₂ umfasst, basierend auf dem Gesamtgewicht des zweiten Bindemittels.

7. Selbstnivellierende Spachtelmasse nach einem der vorstehenden Ansprüche, wobei der Gesamtgehalt an Al₂O₃ in der Spachtelmasse <0,5 Gew.-% beträgt, basierend auf dem Trockengewicht der Spachtelmasse.

8. Selbstnivellierende Spachtelmasse nach einem der vorstehenden Ansprüche, wobei der Gesamtgehalt an SO₃ in der Spachtelmasse 17 bis 19,5 Gew.-% beträgt, basierend auf dem Trockengewicht der Spachtelmasse.

9. Selbstnivellierende Spachtelmasse nach einem der vorstehenden Ansprüche, wobei die Zusatzstoffe ausgewählt sind aus der Gruppe bestehend aus Dispersionspulver, Beschleuniger, Verzögerer, Rheologie-Additive, Hydrophobierungsmittel, Luftporenbildner, Entschäumer und Kombinationen davon.

10. Selbstnivellierende Spachtelmasse nach einem der vorstehenden Ansprüche, wobei der mindestens eine Füllstoff ausgewählt ist aus der Gruppe bestehend aus Sand, Kalksteinmehl, Dolomit und Kombinationen davon.

11. Selbstnivellierende Spachtelmasse nach einem der vorstehenden Ansprüche, wobei das zweite Bindemittel teilamorph ist.

12. Selbstnivellierende Spachtelmasse nach einem der vorstehenden Ansprüche, wobei die Spachtelmasse eine Auslaufzeit von höchstens 70 s, gemessen mit einem Auslaufbecher mit einer 6 mm Düse nach DIN 53211:1987-06 und/oder ein Ausbreitmaß von mindestens 11 cm aufweist.

13. Selbstnivellierende Spachtelmasse nach einem der vorstehenden Ansprüche, wobei die selbstnivellierende Spachtelmasse feuchteresistent ist, wobei eine Spachtelmasse als feuchteresistent bezeichnet wird, wenn die Werte der Haftzug-, Biegezug- und Druckfestigkeiten der Spachtelmasse nach Feuchtelagerung für 28 Tage nicht mehr als 20% von den Werten der Haftzug-, Biegezug- und Druckfestigkeiten der Spachtelmasse nach Normallagerung für 28 Tage abweichen, wobei für eine Normallagerung ein prismatischer Prüfkörper nach DIN EN 13892-1:2003-02 hergestellt und bei 23 °C und 50% r.F. gelagert wird und für eine Feuchtelagerung ein prismatischer Prüfkörper nach DIN EN 13892-1:2003-02 hergestellt und bei 23 °C und 100% r.F. gelagert wird.

14. Selbstnivellierende Spachtelmasse nach einem der vorstehenden Ansprüche, wobei die selbstnivellierende Spachtelmasse dimensionsstabil ist, wobei eine Spachtelmasse als dimensionsstabil bezeichnet wird, wenn die Spachtelmasse eine Längenänderung nach Normallagerung für 28 Tage von < |0,3| mm/m und eine Längenänderung nach Feuchtelagerung für 28 Tage von < |0,3| mm/m aufweist, wobei für eine Normallagerung ein prismatischer Prüfkörper nach DIN EN 13892-1:2003-02 hergestellt und bei 23 °C und 50% r.F. gelagert wird und für eine Feuchtelagerung ein prismatischer Prüfkörper nach DIN EN 13892-1:2003-02 hergestellt und bei 23 °C und 100% r.F. gelagert wird.

15. Verwendung einer Spachtelmasse nach einem der Ansprüche 1 bis 14 zum Nivellieren von Fußbodenuntergründen mit einer Restfeuchtigkeit bis 5 CM%, gemessen nach der CM-Methode, oder 99% r.F., gemessen nach der KRL-Methode oder gemäß ASTM F2170-11, insbesondere in Innenräumen.

## Claims

1. A self-levelling compound, consisting essentially of
30 to 40 wt% of a first binder;
10 to 20 wt% of a second binder;
40 to 59 wt% of at least one filler; and
>0 to 5 wt% of additives and/or other constituents, based on the dry weight of the self-levelling compound,
wherein the weight ratio of the first binder to the second binder is 2 : 1 to 3.5 : 1, and
wherein the first binder is alpha calcium sulfate hemihydrate and the second binder comprises:
35 to 50 wt% CaO;
25 to 45 wt%, SiO₂;
2 to 7 wt% water;
0 to < 1 wt% Fe₂O₃;
0 to <2 wt% Al₂O₃; and
0 to <2 wt% SO₃, based on the total weight of the second binder.

2. The self-levelling compound according to claim 1, wherein at least a portion of the CaO, the SiO₂ and the water in the second binder is present as calcium hydrosilicate.

3. The self-levelling compound according to claim 1 or 2, wherein the second binder consists essentially of calcium hydrosilicates.

4. The self-levelling compound according to any one of the preceding claims, wherein the levelling compound is essentially free of Portland cement, calcium aluminate cement and calcium sulfoaluminate cement.

5. The self-levelling compound according to one of the claims, wherein the weight ratio CaO : SiO₂ in the levelling compound is 1 : 1 to 1.5 : 1.

6. The self-levelling compound according to any one of claims 1 to 4, wherein the second binder comprises 35 to 45 wt% CaO and 35 to 45 wt% SiO₂, based on the total weight of the second binder.

7. The self-levelling compound according to any one of the preceding claims, wherein the total content of Al₂O₃ in the levelling compound is <0.5 wt%, based on the dry weight of the levelling compound.

8. The self-levelling compound according to any one of the preceding claims, wherein the total content of SO₃ in the levelling compound is 17 to 19.5 wt%, based on the dry weight of the levelling compound.

9. The self-levelling compound according to any one of the preceding claims, wherein the additives are selected from the group consisting of dispersion powders, accelerators, retarders, rheological additives, hydrophobizing agents, air-entraining agents, defoamers and combinations thereof.

10. The self-levelling compound according to any one of the preceding claims, wherein the at least one filler is selected from the group consisting of sand, limestone powder, dolomite and combinations thereof.

11. The self-levelling compound according to any one of the preceding claims, wherein the second binder is partially amorphous.

12. The self-levelling compound according to any one of the preceding claims, wherein the levelling compound has an efflux time of at most 70 s, measured with a flow cup with a 6 mm nozzle according to DIN 53211:1987-06 and/or a flow spread of at least 11 cm.

13. The self-levelling compound according to any one of the preceding claims, wherein the self-levelling compound is moisture-resistant, wherein a levelling compound is described as moisture-resistant if the values of the pull-off strength, flexural strength and compressive strength of the levelling compound after moisture storage for 28 days do not differ by more than 20% from the values of the pull-off strength, flexural strength and compressive strength of the levelling compound after normal storage for 28 days, wherein for normal storage a prismatic test specimen is prepared according to DIN EN 13892-1:2003-02 and stored at 23 °C and 50% RH and for moisture storage a prismatic test specimen is prepared according to DIN EN 13892-1:2003-02 and stored at 23 °C and 100% RH.

14. The self-levelling compound according to any one of the preceding claims, wherein the self-levelling compound has dimensional stability, wherein a levelling compound is described as having dimensional stability if the levelling compound has a length change after normal storage for 28 days of < |0.3| mm/m and a length change after moisture storage for 28 days of < |0.3| mm/m, wherein for normal storage a prismatic test specimen is prepared according to DIN EN 13892-1:2003-02 and stored at 23 °C and 50% RH and for moisture storage a prismatic test specimen is prepared according to DIN EN 13892-1:2003-02 and stored at 23 °C and 100% RH.

15. Use of a levelling compound according to any one of claims 1 to 14, in particular indoors, for levelling subfloors with a residual moisture content of up to 5 CM%, measured according to the CM method, or 99% RH, measured according to the KRL method or according to ASTM F2170-11.

## Revendications

1. Mastic autonivelant, constitué essentiellement
de 30 à 40 % en poids de premier liant ;
de 10 à 20 % en poids de second liant ;
de 40 à 59 % en poids d'au moins une charge ; et
de > 0 à 5 % en poids d'additifs et/ou autres constituants, sur la base du poids à sec du mastic autonivelant,
dans lequel le rapport en poids du premier liant sur le second liant est de 2 : 1 à 3,5 : 1, et
dans lequel le premier liant est un semi hydrate de sulfate de calcium α et le second liant comprend :
35 à 50 % en poids de CaO ;
25 à 45 % en poids de SiO₂ ;
2 à 7 % en poids d'eau ;
0 à < 1 % en poids de Fe₂O₃ ;
0 à < 2 % en poids de Al₂O₃ ; et
0 à < 2 % en poids de SO₃, sur la base du poids total de second liant.

2. Mastic autonivelant selon la revendication 1, dans lequel au moins une partie du CaO, du SiO₂ et de l'eau dans le second liant est présente sous forme d'hydrosilicate de calcium.

3. Mastic autonivelant selon la revendication 1 ou la revendication 2, dans lequel le second liant est constitué essentiellement d'hydrosilicates de calcium.

4. Mastic autonivelant selon l'une des revendications précédentes, dans lequel le mastic est essentiellement exempt de ciment Portland, de ciment aluminate de calcium et de ciment sulfo-aluminate de calcium.

5. Mastic autonivelant selon l'une des revendications précédentes, dans lequel le rapport en poids CaO : SiO₂ dans le mastic est de 1 : 1 à 1,5 : 1.

6. Mastic autonivelant selon l'une des revendications 1 à 4, dans lequel le second liant comprend de 35 à 45 % en poids de CaO et de 35 à 45 % en poids de SiO₂, sur la base du poids total de second liant.

7. Mastic autonivelant selon l'une des revendications précédentes, dans lequel la teneur totale en Al₂O₃ dans l le mastic est < 0,5 % en poids, sur la base du poids à sec du mastic.

8. Mastic autonivelant selon l'une des revendications précédentes, dans lequel la teneur totale en SO₃ dans le mastic est de 17 à 19,5 % en poids, sur la base du poids à sec du mastic.

9. Mastic autonivelant selon l'une des revendications précédentes, dans lequel les additifs sont choisis dans le groupe constitué de poudres de dispersion, d'accélérateurs, de retardateurs, d'additifs de rhéologie, d'agents d'hydrophobisation, de formateurs de pores d'air, de démoussants et de combinaisons de ceux-ci.

10. Mastic autonivelant selon l'une des revendications précédentes, dans lequel l'au moins une charge est choisie dans le groupe constitué de sable, de poudre de calcaire, de dolomite et de combinaisons de ceux-ci.

11. Mastic autonivelant selon l'une des revendications précédentes, dans lequel le second liant est partiellement amorphe.

12. Mastic autonivelant selon l'une des revendications précédentes, dans lequel le mastic présente un temps d'écoulement d'au maximum 70 s, mesuré avec un gobelet d'écoulement doté d'une buse de 6 mm selon la norme DIN 53211 : 1987-06 et/ou un coefficient d'étalement d'au moins 11 cm.

13. Mastic autonivelant selon l'une des revendications précédentes, dans lequel le mastic autonivelant est résistant à l'humidité, dans lequel un mastic est caractérisé comme résistant à l'humidité si les valeurs de la force d'adhérence, de la résistance de traction en flexion et de la résistance en compression du mastic après une exposition à l'humidité de 28 jours ne dévient de pas plus de 20 % des valeurs de la force d'adhérence, de la résistance de traction en flexion et de la résistance en compression du mastic après un stockage normal pendant 28 jours, dans lequel un échantillon prismatique selon la norme DIN EN 13892-1 : 2003-02 est fabriqué et est stocké à 23 °C et à 50 % HR pour un stockage normal, et un échantillon prismatique selon la norme DIN EN 13892-1 : 2003-02 est fabriqué et stocké à 23 °C et à 100 % HR pour un stockage humide.

14. Mastic autonivelant selon l'une des revendications précédentes, dans lequel le mastic autonivelant est stable dimensionnellement, dans lequel un mastic est caractérisé comme stable dimensionnellement lorsque le mastic présente une modification de longueur après un stockage normal de 28 jours de < |0,3| mm/m et une modification de longueur après un stockage humide de 28 jours de < |0,3| mm/m, dans lequel un échantillon prismatique selon la norme DIN EN 13892-1 : 2003-02 est fabriqué et stocké à 23 °C et 50 % HR pour un stockage normal et un échantillon prismatique selon la norme DIN EN 13892-1 : 2003-02 est fabriqué et stocké à 23 °C et 100 % HR pour un stockage humide.

15. Utilisation d'un mastic selon l'une des revendications 1 à 14 pour le nivèlement de sous-couches de sol avec une humidité résiduelle jusqu'à 5 % CM, mesurée selon la méthode CM, ou de 99 % HR, mesurée avec la méthode KRL ou selon la norme ASTM F2170-11, en particulier dans des espaces intérieurs.
